# EUROPEAN PATENT SPECIFICATION

(11) **EP 0 672 441 B1**
(45) Date of publication and mention of the grant of the patent: **15.12.1999**
(21) Application number: 95201125.2
(22) Date of filing: 03.02.1989
(51) Int. Cl.: B01D 25/26, B01D 46/10

(54) **Filter cell and filter cell cartridge**
Filterzelle und Zellenfilterkartusche
Cellule filtrante et cartouche de filtre cellulaire

(30) Priority: 03.02.1988 US 151853
(43) Date of publication of application: 20.09.1995
(62) Divisional of application: 89301094.2
(73) Proprietor: Cuno Incorporated, Meriden Connecticut 06450 (US)
(72) Inventor: Artinyan, Arto, Southington, Connecticut 06489 (US); Krzyston, John, Guilford, Connecticut 06437 (US)
(74) Representative: Gillam, Francis Cyril

(56) References cited:
- EP-A- 0 166 465
- EP-A- 0 284 404
- US-A- 2 088 199
- US-A- 3 076 303

## Description

The present invention relates to filter cells and to cell-type filter cartridges made from an assembly of a plurality of such filter cells.

Cell-type filter cartridges have long been used and are being increasingly used in a variety of situations. Such filter cartridges are typically fabricated from individual cells generally having two layers of filter media separated from each other. Liquid typically flows from the outside of the filter medium towards the central portion of the cell. A significant advantage of cell-type filter cartridges is that the surface area of filter material is quite large when compared to the total volume of an assembled cell-type filter cartridge.

Disposed between each filter medium is a separator which is typically formed in the shape of disks having ribs radially extending from the central aperture in a spoke-like pattern. In addition to separating the two layers of filter media, it provides for fluid flow from the filter media towards the central aperture of the filter media. An excellent example of a filter separator may be found in U.S. Application Serial No. 07/032,405 to Ostreicher et al., entitled "Improved Separator for Cell Type Filter Cartridges". The separator disk described therein has stiffening members formed at the central aperture of the cell, which members are attached to a plurality of separating ribs thereby to provide a rigid box-like structure sufficient to impart substantial cantilever strength to the ribs. Further, one of the stiffening members is positioned proximate the ends of the separator ribs in order to act as a load-bearing surface to prevent media intrusion of the filtering medium and to prevent blocking the area of the flow path with the filter liquid. Accordingly, one distinct advantage in this type of separator is that during backwashing or reverse flow (i.e. fluid flow from the central aperture of the filter cell out towards the surface of the filter medium) damage to the filter media is minimised or ameliorated.

Filter cell cartridges use a variety of filter media for filtering many fluids. Examples of such media and uses may be found, for example, in U.S. -A-4,617,128; US-A-4,309,247; US-A-4,305,782; US-A-4,007,113 and US-A-4,007,114

Use of a cell-type filter cartridge may be also found in US-A-4,361,486.

A process for manufacturing filter cells is described in US-A-4,347,208. In this patent, a filter cell cartridge is described which comprises a plurality of filter cells. Each of the filter cells is comprised of filter media having a conical separator therebetween with the periphery or edges of the filter cell being held together and sealed by an injection-moulded flange.

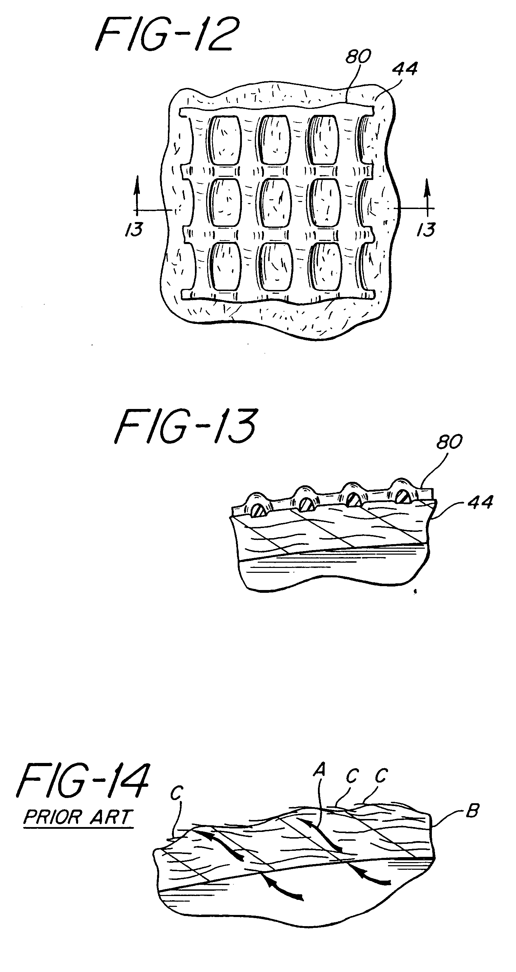

Generally, all of the aforedescribed filter cartridges perform satisfactorily for their intended purpose during normal operation conditions. However, due to the inherent labour and capital costs in replacing the filter cartridge, most applications utilise a backwash or reverse flow process in order to improve volumetric fluid flow therethrough and prolong the life of the cartridge. Obviously, the more backwashing operations that are permissible, the lower the total operating costs of the system. However, during backwashing operations, many filters, including filter cell-type cartridges, experience decreased tensile strength of the media, cracking of the edge seal, masking off of the media and/or flaking off of actual filter medium fibres. An illustration of this process is shown in Figure 14 herein (prior art) wherein fluid, designated A, backflowing through filter media B causes shredding or flaking of the cell medium and the production of frayed edges of particles C. Another problem with filter-cell type cartridges is that unintentional backpressure applied to the filter cell may cause cell rupture and/or distortion.

A number of attempts have been made throughout the years to strengthen filters and to control the flow of fluid therethrough by the use of lattice-type structures external to the actual filter medium. An early example of this may be found in US-A-445,223 entitled "Filter" issued January 27, 1891 to E.M. Knight. The Knight patent utilises a wire screen external to the filter media in order to prevent sagging of the filter media during use, the filter being partially held by the screen. The Knight patent found this feature important since the filter itself used a charcoal paste adjacent a fibrous covering and was hence "limp".

A second example may be found in US-A-2,249,063. This patent utilises a wire screen to provide structural support to the filter media under the high operating temperature and pressure utilised.

Another example may be found in US-A-2,263,853. This patent utilises a metal ribbon twisted about its longitudinal axis in order to support the filter media. Additionally, a supporting screen was utilised which is simultaneously welded at diametrically opposed points on the ribbon.

In US-A-4,274,964 a membrane-type hose in conjunction with an intermediate netting layer is used in an interlocking manner for the purpose of providing an improved flow pattern.

Accordingly, the above mentioned patents use a support of one kind or another for the express purpose of providing a stiff filter support for the "limp" filter during use, i.e. the supports in effect form for filter elements which, by themselves, lack the appropriate physical properties. As such, the prior art braces or nets are used with filters specifically for the purpose of supporting the filter during forward fluid flow conditions as distinct from dealing with the problem of masking off, flaking off of actual filter media fibres, cracking at the edge seal and distortion caused by backwashing and backflow conditions and other related problems. In effect, the problem to be solved by the present invention is not one of the physical integrity during normal operation and use, but rather the reverse of maintaining physical integrity where fluid is flowing contrary to normal flow as during backwashing operations or unintentional backpressure.

EP-A-0284404 discloses a filter disc having a membrane defining a filter cell, the walls of the cell being held apart by means of an internal separator to prevent those walls collapsing inwardly under the operating pressure. A sintered metal mesh may be provided over the external surfaces of the membrane to protect the upstream side thereof. That mesh does not otherwise interact with the membrane.

In order to overcome the difficulties encountered by the prior art, the broadest aspect of the present invention provides a filter cell comprising' a filter cell comprising: a first fibrous filter medium having an inner surface and an outer surface; a second fibrous filter medium having an inner surface and an outer surface, said first and second media being arranged to define the filter cell with said inner surfaces of the first and second fibrous filter media being directed inwardly of the cell and the inner surfaces being joined together around their outer peripheries so as to be coextensive; and means for separating said first fibrous filter medium from said second fibrous filter medium; characterised in that respective netting means is disposed over and retained on the outer surface of said first fibrous filter medium and over and retained on the outer surface of said second fibrous filter medium which netting means co-acts with the outer surface of the respective fibrous filter medium to enhance the tensile strength thereof, and in that said separating means comprises an annular separator engaged with, supporting and holding separated the central regions of the first and second fibrous filter media. The co-action of the netting means (such as a mesh) with the filter medium increases the tensile strength of the medium when wet so that it can resist back pressure and/or backwashing, as well as providing other benefits.

Means may be provided for securing said netting means to said first filter medium and to said second filter medium, which securing means preferably comprises a circumferentially disposed retainer. This retainer may be moulded in place, preferably by an injection moulding process.

The securing means further may comprise a centrally disposed retaining disk on the outer surface of said filter media.

The moulded edge, which is preferably injection-moulded, resiliently engages and holds the netting means tightly to the exterior of the filter medium, and which also sealingly compresses the outer peripheries of the two filter media halves together thereby forming a cell. In this way, cracking at the edge seals of the filter cell may be minimised. Also, the netting means does not detrimentally affect the fluid throughput in a cell.

A filter cell cartridge of this invention may have an improved aesthetic appearance, and is less likely to fail prematurely. The cell does not aesthetically indicate failure when, in effect, the filter cartridge is still serviceable. A filter cell assembly of this invention is less likely to blind or close itself off as readily as prior art devices and prior construction forms, i.e. there is a better utilisation of total surface area and extended life. Fluid flow may be directed across the exterior of the surface by parallel channels formed by the netting, thereby enhancing flow distribution and full utilisation of the filter surfaces.

Another aspect of this invention provides an assembly of a plurality of filter cells of this invention (and at least two, but preferably more than two such filter cells) to form a filter cell cartridge having a filtered fluid outlet in fluid communication with the volume between the first and second filter media of each cell, and sealing means between adjacent filter cells. The cells are disposed co-axially with respect to each other, a separator being disposed between said filtered fluid sides of the first and second filter media of each cell, a filtered fluid outlet being in fluid communication with said separator, a retainer ring assembly being disposed along the mutual periphery of the first and second filter media for securing said netting means thereto, and ring means being centrally disposed adjacent said filtered fluid outlet for securing said netting means to said first and second filter media.

The cartridge may include a sealing disk having at least one but preferably opposing radial surface(s), an aperture axially disposed in said disk, a plurality of concentric, preferably continuous, sealing rings extending from said radial surface, said concentric rings constructed and arranged sealingly to engage the surface of the abutting filter medium, and a fastening ring concentrically disposed about said plurality of sealing rings, constructed and arranged to engage reinforcing netting disposed on the filter media.

By way of example only, one specific embodiment of this invention will now be described in detail, reference being made to the accompanying drawings, in which:
Figure 1 is a perspective view of the embodiment of filter cell cartridge assembly of the present invention;
Figure 2 is a cross-section elevational view taken through Figure 1 along 2-2;
Figure 3 is an overview of the mesh-cutting guide utilised in the present invention;
Figure 4 is a cross-sectional view taken through one of the blades shown in Figure 3;
Figure 5 is an illustrative view of a cut netting blank as utilised in the present invention;
Figure 6 is a partially exploded view of the netting utilised in the present invention adjacent the filter portion of a filter cell;
Figure 7 is a side elevational view showing an assembly of the individual components comprising a filter cell;
Figures 8 and 9 are cross-sectional views illustrating injection-moulding and the mould respectively of the sealed periphery of an individual filter cell;
Figures 10 and 11 illustrate an assembled filter cell and an assembled filter cell cartridge of the present invention;
Figures 12 and 13 illustrate a plan and cross-sectional view respectively of the netting and filter media utilised in the present invention; and
Figure 14 shows typical filter media of prior art filter cell cartridges.

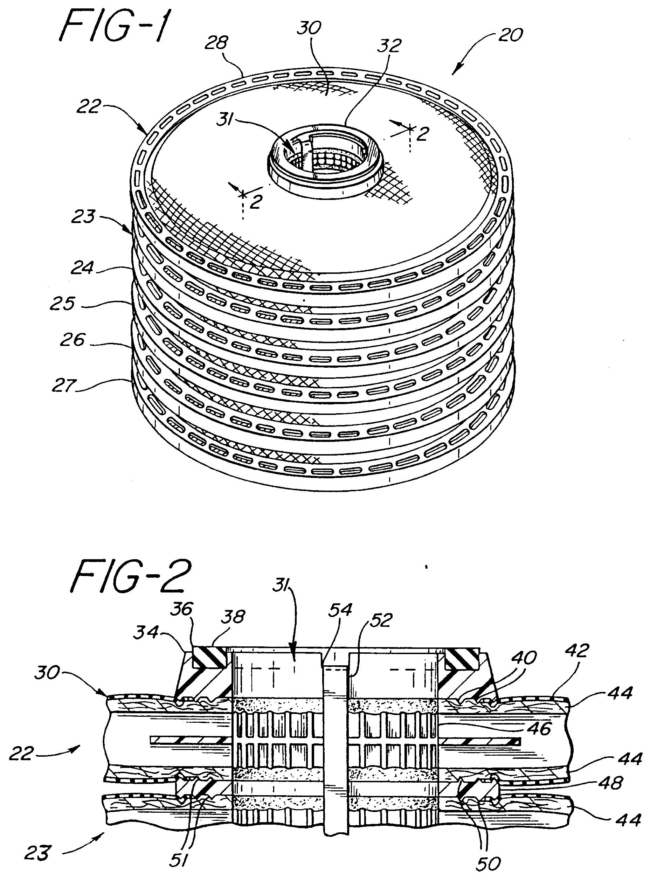

Referring now to Figure 1, there is shown a reinforced filter assembly 20 which is comprised of a plurality of cells 22-27, vertically stacked one upon the other. Disposed along the circumference of each filter cell is a -moulded plastic edge 28 which is utilised to retain the various components of each individual cell together, as described more fully below. A relatively larger filtration area 30 is used for the introduction of unfiltered fluid (not shown) therethrough which exits through the centre aperture or core 31. Disposed at both ends of the assembly 20 is a retainer ring assembly 32. The entire filter assembly 20 is disposed inside a chamber (not shown) having an unfiltered inlet for the chamber and a filtered fluid outlet connected to one or both retainer ring assemblies 32.

Referring now to Figure 2, there is shown a cross-sectional view taken through a portion of the filter cell assembly shown in Figure 1. Retainer ring assembly 32 is comprised of an end fitting 34 having an annular slot 36 therein. Disposed in the annular slot 36 is a gasket 38 which coacts with an annular conduit (not shown) thereby preventing the migration of unfiltered fluid adjacent the filtration area 30 into the central aperture or core 31. A plurality of filter assemblies may be disposed inside a chamber in stacked relationship thereto, thereby allowing replacement of groups of filter assemblies (not shown). A plurality of annular ribs 40 are disposed on the underside of end fitting 34 and provide a fluid-tight fitting between the end fitting 34 and the surface of the filtration area 30, while holding and retaining mesh 42 thereon. Optionally, the mesh 42 may be sealed, e.g. ultrasonically welded, to end fitting 34.

Still referring to Figure 2, filter cell 22,24 is comprised of netting 42 disposed on the outer surfaces thereof. The netting is preferably a mesh of the desired thickness and mesh size sufficient to withstand the forward and backward fluid flow requirements and provided for relatively undiminished fluid flow therethrough while preventing flaking and the like. Hence, this netting supplements, enhances or increases the tensile strength of the filter medium 44 when wet. Generally, any type of netting or mesh may be used which is pervious to flow. It is preferred however to use a polymeric mesh or netting, e.g. polypropylene. It is also preferred to have a rigidized netting or mesh which forms parallel fluid flow channels tangential to the media. A filter material separator 46 is disposed between each of the two adjacent layers of filtration material 44. The separator 46 is utilised to prevent collapse of the filter cell in use and provide integrity to each individual filter cell while providing relatively unimpeded fluid flow therethrough. Further, it has been observed that for "dense" filter cell cartridges when cell-to-cell spacing is minimal, the netting 42 acts as a separator between adjacent cells and therefore aids in fluid flow along the surface.

Disposed between each cell is an inter filter cell spacer 48. The spacer 48 is preferably comprised of the same material as the retainer ring assembly 32. The spacer 48 has a plurality of annular recesses 50 and ridges 51 disposed on both sides. It is preferable that at least two ridges 51 are utilised (and hence two recesses 50) to form a fluid-tight seal between adjacent filtration material disposed on adjacent filter cells. Since the netting has a plurality of apertures therethrough, it has been found that two annular ridges are usually necessary to prevent migration of unfiltered fluid along the netting 42 into the central aperture or core 31.

A plurality of bands 52 engage slots 54 in the retainer ring assembly 32 and extend from the retainer ring assembly at one end to the retainer ring assembly at the other end and are used to form a rigid filter cell assembly 20. The bands 52 are preferably of stainless steel, although any other suitable material may be utilised. Further, it is possible to utilise a plurality of threaded bolts or the like extending through the filter cell assembly and suitably attached to the retainer ring assemblies 32 in order to form a rigid assembly.

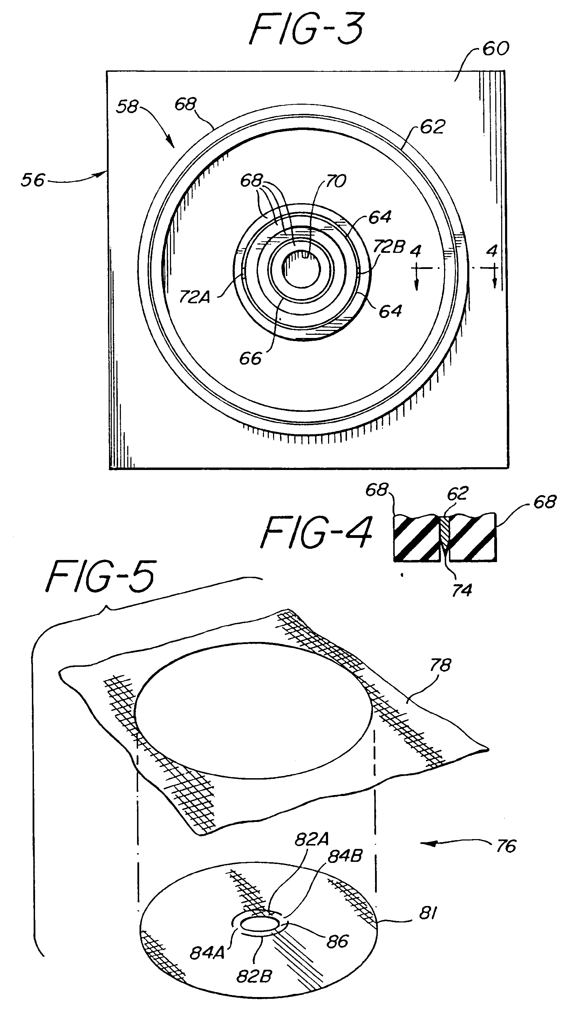

Referring now to Figure 3, there is shown a top view of a cutting die utilised in the manufacture of the described filter cell. A netting cutting die, indicated generally at 56 is utilised to cut netting 56 into the appropriate configuration. The cutting die 56 is comprised of a cutting area, shown generally at 58, disposed on a base 60. Three cutting blades are disposed on the base 60. An outer circumference cutting blade 62 is utilised to cut the outer diameter of the netting to the approximate size of the filter cell with which it is to be used. Radially inward is disposed an additional cutting blade, designated 64. Another blade is shown at 66 and is an inner circumference cutting blade. Disposed between adjacent blades are spacers 68 (shown more clearly in Figure 4) which are preferably of a sponge-type material to provide some backing to the netting during the cutting operation so that cutting is more uniform along the annual edge of the blade and to free the netting from the die after being cut. The inner circumference cutting blade has axially disposed therein a centring hole 70 which is used for alignment or registration purposes in cutting the netting. Several non-cutting portions, designated respectively as notches 72A, 72B are disposed on cutting blade 64. Each cutting blade is generally a thin sheet stock bent into an annular configuration having one end sharpened so as to form blade tip 74.

Referring to Figure 5, use of the cutting die 56 is more clearly illustrated via a representation of how the netting utilised is cut. The netting blank is larger than the required area. The netting is placed onto the cutting die 56 thereby forming the appropriate cuts resulting in a number of portions. These portions include discard material 78 and filter netting 80 which is material that is actually used with the filter cell. The cutting blade 64 results in netting flaps 82A, 82B respectively, which remain attached to the netting via netting notches 84A, 84B. This therefore results in a frangible type of plug (or doughnut) 86. It has been found that it is necessary to produce the doughnut-like structure 86 in order to facilitate assembly of each filter cell. More particularly, the centre aperture is utilised to centre the netting with respect to the filtration material during the actual assembly.

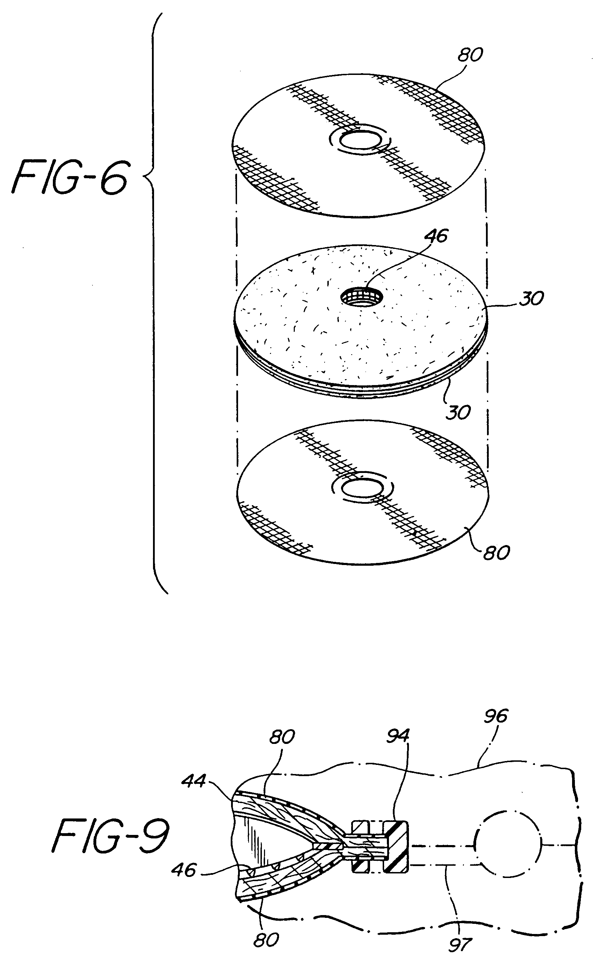

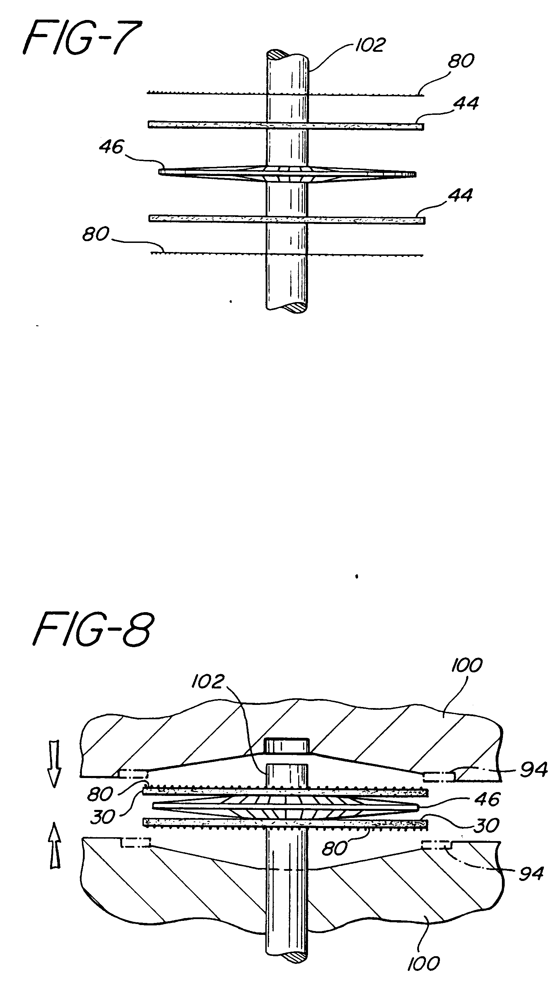

Referring to Figure 7, preliminary alignment and assembly of a filter cell is shown. More specifically, a cell assembly mandrel 102 is utilised to align the various components of a filter cell. Initially placed onto mandrel 102 is a filter material separator 46. On either side of separator 46 is the filtration material 44, followed by filter netting 80. This form the assembly shown in Figure 6 (without the mandrel 102).

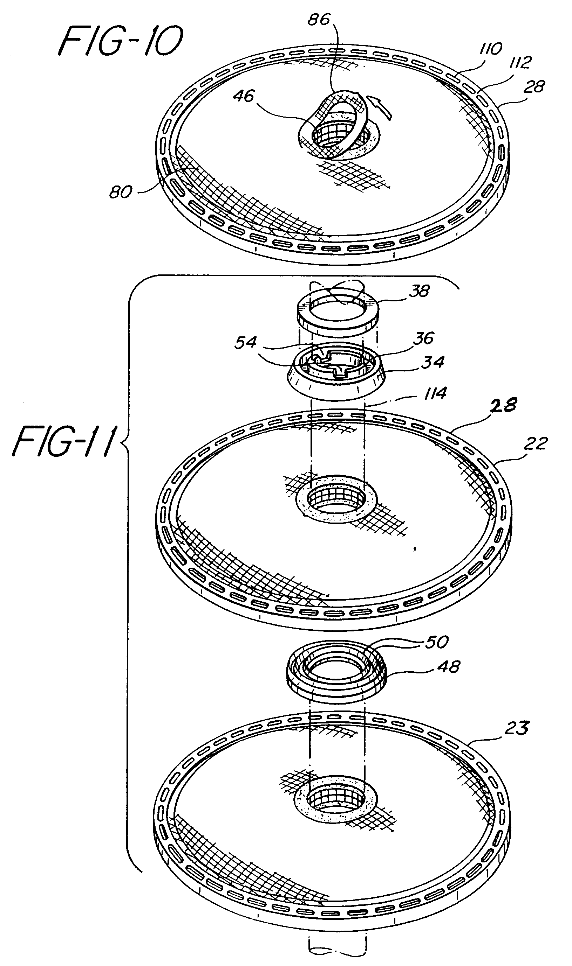

Moulding of the edge 28 on each filter cell is accomplished as shown in Figures 8 and 9. There, a cell assembly press 100 disposed on mandrel 102 (or any other suitable or subsequent mandrel) and comprised of essentially two halves are axially urged along mandrel 102 towards each other until mated as shown in Figure 9. This causes the edge of netting 80 to be compressed against filtration material 44. A cavity, as part of injection mould 96 contained on cell assembly press 100, is configured so as to be in the shape of edge 28 along the annular edge of the compressed filter cell. Molten material is then injected through sprue 97 of die 96, and enters into cavity 94 so as to form edge 28. In the preferred embodiment of the present invention, the edge material is the same as retainer ring assembly 32 and inter filter cell spacer 48, although any other suitable type of material may be utilised. The press 100 remains closed until sufficient cooling of the injected material is accomplished after which time the mould is then separated and the filter cell removed from mandrel 102. The netting 80 thus becomes sealed to and/or an integral part of the edge seal 28.

Referring now to Figures 10 and 11, final construction of a filter cell assembly is shown. The moulded edge 28 has a plurality of elongate slots of apertures 110 having spacer portions 112 disposed therebetween. After the moulding process shown by Figures 8 and 9, the plug 86 is removed as shown. In order to facilitate removal of the plug 86, netting notches 84A and 84B are utilised. Therefore it is possibly merely to pull on plug 86 in order to remove it from the netting 80 without performing a further cutting operation. The inner diameter of the plug 86 is only used for centring purposes about mandrel 102 during preliminary assembly steps and is removed prior to construction of the filter cell assembly 20.

Actual assembly of the filter cell assembly is accomplished by use of a filter assembly mandrel 114, which is utilised properly to align the various components in the filter cell assembly. An inter filter cell spacer 48 is placed between adjacent filter cells 22,24. On the outside of the end filter cells there is an end fitting 34 having a gasket 38 therein. Thereafter, the mandrel 114 is removed and the bands 52 are placed into slots 54, compressing the cells and components thereof thereby to form a rigid cohesive filter cell assembly structure 20 wherein retainer rings 34 and separators 48 are urged against the filter media and netting thereby to seal the central core 31.

Referring now to Figures 12 and 13, top and cross-sectional views of filter netting 80 overlaid onto filtration material 44 are shown. The netting 80 may have a relatively smooth or planar undersurface to contact the filtration material 44 or may protrude into the filter media. Both types of netting minimise cracking, flaking and the like. The netting holds down the filtration material 44 to the maximum extent possible without impeding fluid flow therethrough.

Tests were conducted to compare the present invention with prior art filter cell designs. These tests produced the following results:

| Back Pressure Test | |
|---|---|
| Type of Cell | Burst Pressure (Kg/cm²) |
| Standard/Prior art | 0.105 - 0.210 (1.5 - 3.0 psi) |
| Reinforced with netting | 1.125 - 1.55 (16.0 - 22.0 psi) |

Further, while a number of different types of netting were tried, type no. XN 7020 manufactured by Conwed Plastics of Minneapolis, Minnesota, was found to produce the best results. However other types of netting produced by Conwed Plastics, such as part Nos. XN7025, XN4210, XN4700 and XN3900 are workable. The first two of these part numbers respectively performed most satisfactorily and had a strand configuration of 7 by 5 and a standard resin PP/PE blend. However, it is to be understood that other reinforced netting produced by other manufacturers is acceptable as individual circumstances dictate.

The embodiment described above may be modified without departing from the scope of the present invention. For example, the filter cells may be of different configurations, such as cylindrical, while different types of edge mechanisms may be utilised. Further, different types of material may be utilised while different methods of assembly may similarly be used. Additionally it would be possible to place netting on the interior of the filter cell adjacent the filtration material so as to prevent flaking, cracking and the like during filter operation without departing from the scope of the present invention.

Accordingly, a filter cell and an improved cell-type filter cartridge are provided, having an injection-moulded edge which resiliently engages and holds reinforced netting tightly to the filter medium. The proposed manufacturing method allows the assembly of an improved filter cell cartridge which minimises leakage and produces an aesthetically improved filter cell which does not prematurely fail or aesthetically indicate failure. The filter cell is inexpensive but has improved physical and aesthetic characteristics by the use of netting means which minimises the frequency at which the filter cell blinds or closes itself off while increasing mechanical and tensile strength as well as burst strength and the like.

## Claims

1. A filter cell comprising: a first fibrous filter medium (44) having an inner surface and an outer surface; a second fibrous filter medium (44) having an inner surface and an outer surface, said first and second media (44) being arranged to define the filter cell with said inner surfaces of the first and second fibrous filter media being directed inwardly of the cell and the inner surfaces being joined together around their outer peripheries (28) so as to be coextensive; and means (46) for separating said first fibrous filter medium from said second fibrous filter medium; characterised in that respective netting means (42) is disposed over and retained on the outer surface of said first fibrous filter medium and over and retained on the outer surface of said second fibrous filter medium which netting means co-acts with the outer surface of the respective fibrous filter medium to enhance the tensile strength thereof, and in that said separating means comprises an annular separator (46) engaged with, supporting and holding separated the central regions of the first and second fibrous filter media (44).

2. A filter cell according to claim 1, further characterised in that there is means (28) around the outer peripheries of the first and second filter media (44) and separate means (34,48) at the central region of the filter media (44) for securing said netting means (42,80) to said first and second filter media.

3. A filter cell according to claim 2, wherein said means for securing said netting means (42,80) to the outer peripheries of said first and second filter media comprises a circumferentially-disposed retainer (28).

4. A filter cell according to claim 3, wherein said retainer (28) is moulded in position around the circumference of the first and second filter media.

5. A filter cell according to any of claims 2 to 4, wherein said means for securing said netting means on said first and second filter media further comprises a centrally-disposed retaining disk (34,48) bearing on the outer surfaces of said filter media.

6. A filter cell according to any of claims 2 to 6, wherein there is a filtered fluid outlet (31) communicating through the separator (46) to the space between the inner surfaces of the first and second filter media, the cell further comprising ring means centrally disposed adjacent to said filtered fluid outlet for securing said netting means (42,80) to said first and second filter media.

7. A filter cell cartridge comprising an assembly of a plurality of filter cells (22-28) each of which comprises a filter cell according to any of claims 1 to 6, which cartridge has a filtered fluid outlet (31) in fluid communication with the volume between said first filter medium (44) and said second filter medium (44) of each cell, and sealing means (48) disposed between adjacent filter cells.

8. A filter cell cartridge according to claim 7, wherein a first filter cell (22) of said assembly includes a first filter medium (44) having first and second opposing exterior surfaces, there being a first retainer ring assembly (34) disposed centrally on the first of said exterior surfaces;
a second filter cell (23) of said assembly includes a second filter medium (44) having first and second opposing exterior surfaces, said second filter cell being axially spaced from the second exterior surface of said first filter cell (22);
a separator (48) disposed between the second exterior surface of said first filter medium and the first exterior surface of said second filter medium; and
a second retainer ring assembly is disposed on the second exterior surface of said second filter cell.

9. A filter cell cartridge according to claim 7 or 8, wherein each filter cell (22-27) is annular, said filter cells being axially disposed with respect to each other, and each said filter cell having a centrally-disposed aperture (31) therethrough;
the cartridge further comprising:
means (46) for separating inner surfaces of the filter media of each cell;
spacer means (48) disposed between adjacent filter cells and coextensive with said aperture (31) in said filter cells;
a first retainer ring assembly (34) disposed on the outer surface of the first (22) of said plurality of said annular filter cells;
a second retainer ring assembly disposed on the outer surface of the last of said plurality of said annular filter cells; and
the netting means (42,80) of each cell coextensive with said outer surface of said filter medium of the cell and having a centrally disposed aperture therethrough coextensive with said aperture through the cell.

## Patentansprüche

1. Filterzelle, die aufweist: ein erstes faseriges Filtermedium (44) mit einer inneren Oberfläche und einer äußeren Oberfläche; ein zweites faseriges Filtermedium (44) mit einer inneren Oberfläche und einer äußeren Oberfläche, wobei die ersten und zweiten Medien (44) so angeordnet sind, um die Filterzelle mit den inneren Oberflächen der ersten und zweiten faserigen Filtermedien zum Inneren der Zelle gerichtet und mit den inneren Oberflächen in Überdeckung miteinander entlang ihrer äußeren Umfänge (28) verbunden zu definieren; und Mittel (46) zum Trennen des ersten faserigen Filtermediums von dem zweiten faserigen Filtermedium; dadurch gekennzeichnet, daß jeweils eine Netzeinrichtung (42) über der äußeren Oberfläche des ersten faserigen Filtermediums angeordnet und darauf gehalten ist und über der äußeren Oberfläche des zweiten faserigen Filtermediums angeordnet und darauf gehalten ist, wobei die jeweilige Netzeinrichtung mit der äußeren Oberfläche des jeweiligen faserigen Filtermediums zusammenwirkt, um dessen Zugfestigkeit zu erhöhen, und daß die Trennmittel ein ringförmiges Trennelement (46) aufweist, das an den mittleren Bereichen der ersten und zweiten faserigen Filtermedien (44) anliegt, sie stützt und getrennt voneinander hält.

2. Filterzelle nach Anspruch 1, weiter dadurch gekennzeichnet, daß Mittel (28) entlang der äußeren Umfänge der ersten und zweiten Filtermedien (44) und getrennte Einrichtungen (34, 48) im mittleren Bereich der Filtermedien (44) zum Befestigen der Netzeinrichtungen (42, 80) an den ersten und zweiten Filtermedien vorhanden sind.

3. Filterzelle nach Anspruch 2, wobei die Mittel zum Befestigen der Netzeinrichtungen (42, 80) an den äußeren Umfängen der ersten und zweiten Filtermedien einen am Umfang verlaufenden Halter (28) aufweisen.

4. Filterzelle nach Anspruch 3, wobei der Halter (28) in Position um den Umfang der ersten und zweiten Filtermedien geformt ist.

5. Filterzelle nach einem der Ansprüche 2 bis 4, wobei die Mittel zum Befestigen der Netzeinrichtungen an den ersten und zweiten Filtermedien weiter eine mittig angeordnete Haltescheibe (34, 48) aufweisen, die an den äußeren Oberflächen der Filtermedien anliegt.

6. Filterzelle nach einem der Ansprüche 2 bis 5, wobei ein Filterflüssigkeitsauslaß (31) vorhanden ist, der durch das Trennelement (46) mit dem Raum zwischen den Innenflächen der ersten und zweiten Filtermedien kommuniziert, wobei die Zelle ferner eine Ringeinrichtung aufweist, die mittig, angrenzend an den Filterflüssigkeitsauslaß angeordnet ist, um die Netzeinrichtungen (42, 80) an den ersten und zweiten Filtermedien zu befestigen.

7. Filterzellenkassette mit einer Anordnung einer Mehrzahl von Filterzellen (22-28), von denen jede eine Filterzelle nach einem der Ansprüche 1 bis 6 umfaßt, wobei die Kassette einen Filterflüssigkeitsauslaß (31) in Fluidverbindung mit dem Volumen zwischen dem ersten Filtermedium (44) und dem zweiten Filtermedium (44) jeder Zelle und Dichtungseinrichtungen (48) aufweist, die zwischen benachbarten Filterzellen angeordnet sind.

8. Filterzellenkassette nach Anspruch 7, wobei eine erste Filterzelle (22) der Anordnung ein erstes Filtermedium (44) mit ersten und zweiten gegenüberliegenden Außenflächen aufweist, wobei eine erste Halteringanordnung (34) mittig an der ersten der Außenoberflächen angeordnet ist;
eine zweite Filterzelle (23) der Anordnung ein zweites Filtermedium (44) aufweist, das erste und zweite gegenüberliegende Außenoberflächen hat, wobei die zweite Filterzelle axial beabstandet von der zweiten Außenoberfläche der ersten Filterzelle (22) ist;
ein Trennelement (48) zwischen der zweiten Außenoberfläche des ersten Filtermediums und der ersten Außenoberfläche des zweiten Filtermediums angeordnet ist; und
eine zweite Halteringanordnung an der zweiten Außenoberfläche der zweiten Filterzelle angeordnet ist.

9. Filterzellenkassette nach Anspruch 7 oder 8, wobei jede Filterzelle (22-27) ringförmig ist, wobei die Filterzellen axial in Bezug zueinander angeordnet sind und jede Filterzelle eine mittig angeordnete, hindurchgehende Öffnung (31) hat;
wobei die Kassette weiter aufweist:
Mittel (46) zum Trennen der inneren Oberflächen der Filtermedien jeder Zelle;
Abstandshaltermittel (48), die zwischen benachbarten Filterzellen angeordnet sind und gleiche Ausdehnung mit der Öffnung (31) in den Filterzellen haben;
eine erste Halteringanordnung (34), die an der äußeren Oberfläche der ersten (22) aus der Vielzahl von ringförmigen Filterzellen angeordnet ist;
eine zweite Halteringanordnung, die an der äußeren Oberfläche der letzten aus der Vielzahl von ringförmigen Filterzellen angeordnet ist; und
wobei die Netzeinrichtungen (42, 80) jeder Zelle die gleiche Ausdehnung haben wie die Außenoberfläche des Filtermediums der Zelle und eine mittig angeordnete hindurchgehende Öffnung haben, die die gleiche Ausdehnung wie die Öffnung durch die Zelle hat.

## Revendications

1. Cellule filtrante comprenant :
- un premier médium filtrant fibreux (44) ayant une surface intérieure et une surface extérieure; un second médium filtrant fibreux (44) ayant une surface intérieure et une surface extérieure, les premier et second médiums (44) étant agencés pour définir la cellule filtrante avec lesdites surfaces intérieures des premier et second médiums filtrants fibreux qui sont dirigées vers l'intérieur de la cellule et les surfaces intérieures étant jointes autour de leur périphérie extérieure (3, 28) de façon à être coextensives; et des moyens (46) pour séparer le premier médium filtrant fibreux du second médium filtrant fibreux; caractérisée en ce que des moyens respectifs formant filet (42) sont disposés par-dessus et retenus sur la surface extérieure du premier médium filtrant fibreux, et par-dessus et retenus sur la surface extérieure du second médium filtrant fibreux, lesdits moyens formant filet coopérant avec la surface extérieure du médium filtrant fibreux respectif pour en améliorer la résistance à la traction, et en ce que lesdits moyens de séparation comprennent un séparateur annulaire (46) qui porte contre les régions centrales des premier et second médiums filtrants fibreux (44), les supporte et les maintient séparées.

2. Cellule filtrante selon la revendication 1, caractérisée en outre en ce qu'il y a des moyens (28) autour des périphéries extérieures des premier et second médiums filtrants (44), et des moyens séparés (34, 38) en la région centrale des médiums filtrants (44), pour fixer les moyens formant filet (42, 80) aux premier et second médiums filtrants.

3. Cellule filtrante selon la revendication 2, dans laquelle lesdits moyens pour fixer les moyens formant filet (42, 80) aux périphéries extérieures desdits premier et second médiums filtrants comprennent un dispositif de retenue (28) disposé circonférentiellement.

4. Cellule filtrante selon la revendication 3, dans laquelle le dispositif de retenue (28) est moulé en position autour de la circonférence des premier et second médiums filtrants.

5. Cellule filtrante selon l'une quelconque des revendications 2 à 4, dans laquelle lesdits moyens pour fixer les moyens formant filet sur lesdits premier et second médiums filtrants comprennent en outre un disque de retenue (34, 48) disposé en position centrale, portant sur les surfaces extérieures desdits médiums filtrants.

6. Cellule filtrante selon l'une quelconque des revendications 2 à 6, dans laquelle il y a une sortie (31) de fluide filtré communiquant à travers le séparateur (46) avec l'espace entre les surfaces intérieures des premiers et seconds médiums filtrants, la cellule comprenant en outre des moyens annulaires disposés en position centrale et adjacente à ladite sortie de fluide filtré pour fixer les moyens formant filet (42, 80) auxdits premier et second médiums filtrants.

7. Cartouche de filtre cellulaire comprenant un ensemble de plusieurs cellules filtrantes (22-28) dont chacune comprend une cellule filtrante selon l'une quelconque des revendications 1 à 6, cette cartouche possédant une sortie (31) de fluide filtré en communication de fluide avec le volume entre le premier médium filtrant (44) et le second médium filtrant (44) de chaque cellule, et des moyens d'étanchéité (48) disposés entre cellules filtrantes adjacentes.

8. Cartouche à filtre cellulaire selon la revendication 7, dans laquelle une première cellule filtrante (22) dudit ensemble inclut un premier médium filtrant (44) ayant des première et seconde surfaces extérieures opposées, et il y a un premier ensemble annulaire de retenue (34) disposé en position centrale sur la première desdites surfaces extérieures;
une deuxième cellule filtrante (23) dudit ensemble comprend un deuxième médium filtrant (44) possédant des première et seconde surfaces extérieures opposées, la deuxième cellule filtrante étant espacée axialement de la seconde surface extérieure de la première cellule filtrante (22);
un séparateur (48) disposé entre la seconde surface extérieure du premier médium filtrant et la première surface extérieure du deuxième médium filtrant; et
un second ensemble annulaire de retenue est disposé sur la seconde surface extérieure de la deuxième cellule filtrante.

9. Cartouche à filtre cellulaire selon la revendication 7 ou 8, dans laquelle chaque cellule filtrante (22-27) est annulaire, les cellules filtrantes étant disposées axialement les unes par rapport aux autres, et chaque cellule filtrante précitée étant traversée par une ouverture (31) disposée en position centrale;
la cartouche comprenant en outre :
des moyens (46) pour séparer des surfaces intérieures des médiums filtrants de chaque cellule;
des moyens d'écartement (48) disposés entre cellules filtrantes adjacentes et coextensifs avec ladite ouverture (31) dans les cellules filtrantes;
un premier ensemble annulaire de retenue (34) disposé sur la surface extérieure de la première (22) desdites plusieurs cellules filtrantes annulaires;
un second ensemble annulaire de retenue disposé sur la surface extérieure de la dernière desdites plusieurs cellules filtrantes annulaires; et
les moyens formant filet (42, 80) de chaque cellule, coextensifs avec ladite surface extérieure du médium filtrant de la cellule et traversés par une ouverture disposée en position centrale, coextensive avec ladite ouverture à travers la cellule.
